# EUROPEAN PATENT APPLICATION

(11) **EP 4 809 819 A1**
(43) Date of publication of application: **23.09.2026**
(21) Application number: 25202193.6
(22) Date of filing: 15.09.2025
(51) Int. Cl.: A01G 23/00, B66C 1/58

(54) **FORWARDER WITH AUTOMATIC CONTROL OF GRAPPLE ROTATION**

(30) Priority: 19.03.2025 EP 25164750
(71) Applicant: Deere & Company, Moline, IL 61265 (US)
(72) Inventor: Hyvonen, Mika P., Mannheim (DE); Siltanen, Vesa, Mannheim (DE); Käppi, Timo, Mannheim (DE); Paakkunainen, Marko, Mannheim (DE); Palmroth, Mikko, 68163 Mannheim (DE); Solopuro, Niko, 68163 Mannheim (DE)
(74) Representative: Holst, Sönke

(57) **Abstract**

A forwarder (10) comprises:
an articulated boom (20) having a distal end (24), wherein the boom (20) is movable in vertical and horizontal directions and slewable around a vertical rotation axis (X_{c}),
a loading space (12) that is open at the top,
a grapple (30) for handling logs and suspended from the distal end (24),
a control unit (60) for controlling actuators (101-105) configured to control movements of the boom (20) and rotation of the grapple (30), and
at least one manually operable control input device (70, 80) operatively connected to the control unit (60) and adapted to be manually operated by an operator for controlling operation of the boom (20) and the grapple (30),
wherein the control unit (60) is configured to control the actuators (101-105) to move the boom (20) and to automatically rotate the grapple (30) with respect to the distal end (24) into a predefined position and orientation for grabbing one or more logs, and/or to control the actuators (101-105) to move the boom (20) and to automatically rotate the grapple (30) with respect to the distal end (24) into a predefined position and orientation for depositing the one or more logs.

The control unit (60) is configured to receive instructions defining the direction of rotation of the grapple (30) from the control input device (70, 80), and/or comprises an adaptive, closed control loop for controlling the actuator (105) rotating the grapple (30).

## Description

The present invention is related to a forwarder with:
an articulated boom having a distal end, wherein the boom is movable in vertical and horizontal directions and slewable around a vertical rotation axis (X_{c}),
a loading space that is open at the top,
a grapple for handling logs and suspended from the distal end,
a control unit for controlling actuators configured to control movements of the boom (20) and rotation of the grapple, and
at least one manually operable control input device operatively connected to the control unit and adapted to be manually operated by an operator for controlling operation of the boom and the grapple,
wherein the control unit is configured to control the actuators to move the boom and to automatically rotate the grapple with respect to the distal end into a predefined position for grabbing one or more logs, and/or to control the actuators to move the boom and to automatically rotate the grapple with respect to the distal end into a predefined position for depositing the one or more logs.

### Prior Art

In forestry, trees growing in a forest at a worksite are in many cases felled, delimbed and also crosscut to a desired length or into logs with a so-called forest harvester, which is a self-propelled vehicle including a harvester head attached to an articulated boom of the forest harvester. The logs remain on the worksite along a route on a position where they have been ejected by the harvester head during crosscutting and deposited in one or more piles, which are optionally sorted according to defined properties of the logs, such as species and timber assortment, and are collected subsequently with a so-called forwarder.

The forwarder is a self-propelled vehicle including an articulated boom with to head of which a grapple is attached for grabbing one or more logs at a time and a loading space that is surrounded by posts and into which the collected logs are deposited. Once the loading space is sufficiently filled, the forwarder drives to a forest depot which may be adjacent to a logging road and deposits the logs in a single or multiple piles, in particular sorted according to the defined properties of the logs. The logs are later collected by trucks and transported to a processing plant such as a sawmill or a paper factory.

When working with the forwarder, a typical task to be performed with the boom is to transfer logs from locations outside of the loading space to the inside of the loading space and lower the grapple for depositing the logs. Another typical task to be performed with the boom after depositing the logs into the loading space is to move the empty grapple from the loading space back to a location outside the loading space where logs to be loaded have been collected into a pile.

The boom of the forwarder is provided with a number of actuators for allowing a three-dimensional movement of the distal end of the boom and thus the grapple to grab a log and move it from its original position to a desired position. Traditionally, all these actuators are controlled by an operator, usually via one or more joysticks with switches. The operator thus controls the angle of the proximal end of the boom around the vertical axis with respect to the chassis of the forwarder, the inclination of the proximal end of the boom around a horizontal axis, an articulation angle of a telescoping jib at the distal area of the boom, the length of the telescoping jib and the rotation angle of the grapple, and finally to opening and closing of the grapple.

For control of actuators controlling the movement of the boom based on manual control inputs by an operator, which operator inputs are used to teach an automated, learned boom control that subsequently repeats the learned commands, reference is made to the prior art described in EP 4 470 363 A. In this prior art, no automatic control of the actuator that rotates the grapple around the vertical axis with respect to the distal end of the boom is described.

US 2016/0054739 A1 describes an automatic control of the rotation of the grapple around the vertical axis with respect to the boom while the operator controls the movement of the distal end of the boom. The rotation angle of the grapple depends on the movement of the boom. For example, if logs are loaded into the forwarder, the grapple orientation will be rotated to be oriented transversely to the longitudinal axis of the logs when the grapple moves towards a pile of logs to be loaded and during movement towards the loading space, the grapple rotates such that the logs are parallel to the forward direction of the forwarder when they reach the loading space.

US 11 937 554 B2 relates to automatic control of the rotation angle of the grapple around the vertical axis based on the position of the distal end of the boom. The rotation direction of the grapple can be automatically determined such that a collision with an obstacle (detected by a sensor) is avoided or the rotation direction with the shortest rotation angle is selected.

Wallin, E.; Wiberg, V.; Servin, M. Multi-Log Grasping Using Reinforcement Learning and Virtual Visual Servoing. Robotics 2024, 13, 3. https://doi.org/10.3390/robotics13010003, describe a simulated control of automatic loading logs into a forwarder using model-free reinforcement learning and virtual visual servoing for multi-log grasping, based among others on a virtual load cell in the rotator of the grapple sensing grapple-load weight (mass) that can be provided in practice by boom configuration and pressure in the hydraulic cylinder of the main boom.

### Problem

The prior art thus describes some automation of the rotation of the grapple around the vertical axis, with automatic selection of the rotation direction based on avoidance of detected obstacles or simply using the rotation direction with the smallest angle. However, obstacle sensing requires approximate sensors, while the shortest rotation direction can be problematic for several reasons, among others due to possible obstacles.

Another problem of the prior art is a precise control of the rotation angle of the grapple. The hydraulic actuator is connected to a pump and a control valve, which is provided on the chassis of the forwarder, by relatively long hydraulic hoses, such that the pressure on the actuator varies with mechanical load acting onto the latter. The mechanical load on its end depends on the mass and inertia of the load, i.e. the log to be moved. The system is thus challenging to control and tends to be instable. The prior art as discussed above is silent on details of the control loop for the rotation of the grapple or uses a camera as a feedback sensor for controlling boom and grapple movement, which on its end is problematic in outdoor and in particular in forestry environments.

The present invention has the goal to avoid or at least reduce one or more of these problems.

### Solution

The present invention is defined by the claims.

According to a first aspect, a forwarder is provided with:
an articulated boom having a distal end, wherein the boom is movable in vertical and horizontal directions and slewable around a vertical rotation axis,
a loading space that is open at the top,
a grapple for handling logs and suspended from the distal end,
a control unit for controlling actuators configured to control movements of the boom and rotation of the grapple, and
at least one manually operable control input device operatively connected to the control unit and adapted to be manually operated by an operator for controlling operation of the boom and the grapple,
wherein the control unit is configured to control the actuators to move the boom and to automatically rotate the grapple with respect to the distal end into a predefined position and orientation for grabbing one or more logs, and/or to control the actuators to move the boom and to automatically rotate the grapple with respect to the distal end into a predefined position and orientation for depositing the one or more logs,
wherein the control unit is configured to receive instructions defining the direction of rotation of the grapple from the control input device.

In other words, the control unit can control the actuators to move the boom between the log loading and a log unloading position or vice versa based on operator control, using the manually operated control input device or automatically and during this movement, also automatically control the actuator controlling the angle of the grapple, such that the grapple is moved into a position including an automatically controlled orientation around the vertical axis in which logs can be grabbed or deposited. The grapple is thus rotated automatically, whereby the rotation direction is defined by the operator via the control input device. Hence, the operator input is a "one touch" command for the rotation direction. The optimal rotation direction can depend on different factors, like rotation angle (that can be minimized), log conicity to obtain an even load in the loading space and obstacle avoidance in some cases. All these factors and impacts can be considered by the operator, and a complex and nevertheless error-prone sensor system for detecting obstacles and other factors is not needed.

According to a second aspect, a forwarder is provided with:
an articulated boom having a distal end, wherein the boom is movable in vertical and horizontal directions and slewable around a vertical rotation axis,
a loading space that is open at the top,
a grapple for handling logs and suspended from the distal end, and
a control unit for controlling actuators configured to control movements of the boom and rotation of the grapple,
wherein the control unit is configured to control the actuators to move the boom and to automatically rotate the grapple with respect to the distal end into a predefined position and orientation for grabbing one or more logs, and/or to control the actuators to move the boom and to automatically rotate the grapple with respect to the distal end into a predefined position and orientation for depositing the one or more logs,
and the control unit comprises an adaptive, closed control loop for controlling the actuator rotating the grapple, the closed control loop including a controller configured to receive a load signal representing a mass, weight and/or moment of inertia of the grapple and the log or logs carried by the grapple, a signal representing a desired angle of the actuator and a signal from a sensor representing the actual angle of the grapple and configured to provide control signals to the actuator based on the received signals.

Hence, the actual load of the grapple is used to control the actuator in a closed-loop control, thus allowing a precise automatic control of the grapple rotation.

### Embodiment

In the following, embodiments will be described in more detail with reference to the appended drawings, in which
- Fig. 1: shows an example of a forwarder in which the invention can be applied,
- Fig. 2: shows in a schematic manner details and connections, including controllers for manual control of a boom of the forwarder shown in Fig. 1, operably connected to each other, the boom, and a control unit of the forwarder, and
- Fig. 3: shows in a top view of a loading space of the forwarder shown in Fig. 1 and illustrating automatic transfer of a grapple of the forwarder along a path and via predetermined target positions.

### Forwarder

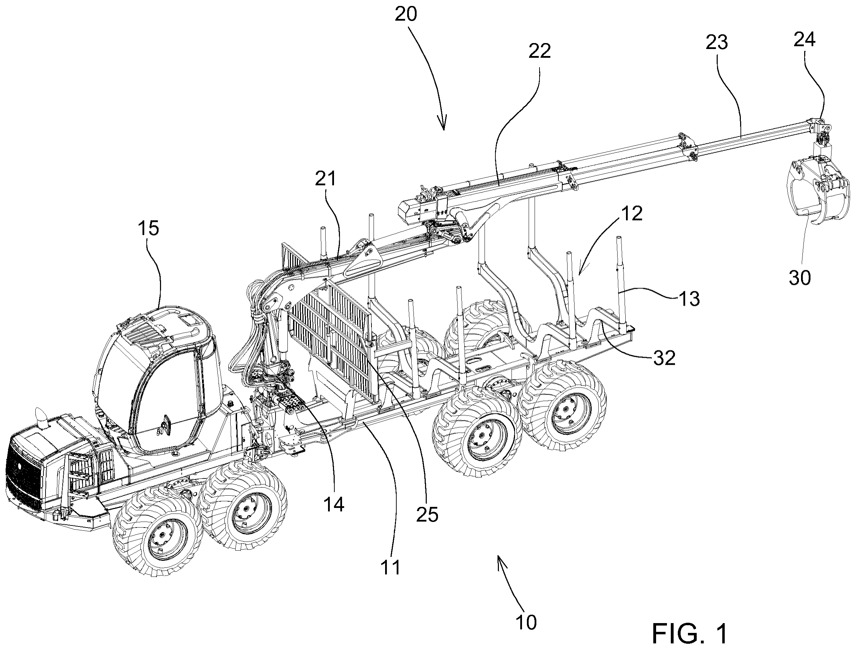

Figure 1 shows a forwarder 10 in which the invention can be applied. The forwarder 10 comprises an articulated chassis 11 with a rear part and a front part, both supported on wheels. The front part supports an operator's cabin 15 and an engine compartment. The rear part includes a loading space 12 for logs and supports an articulated boom 20 having a log handling tool in the form of a grapple 30, attached to the distal end 24 of boom 20. The boom 20 with the grapple 30 may be moved into a stowed position in which they are located in the loading space 12 that is open at the top. The rear part further supports a protective headboard 25 between the operator's cabin 15 and the loading space 20.

The loading space 12 is surrounded by posts 13. The posts 13 are supported on bunks 32 supported by and extending across the rear part. Each bunk 32 may include a pair of posts 13 on opposite sides of the rear part. The posts 13 are located on both sides of the rear part and on each side, the posts 13 are consecutive in the longitudinal direction of the forwarder 10 and the loading space 12. There may be at least two consecutive posts 13 on each side.

The loading space 12 is bordered by structures, for example by walls, the posts 13 and/or the headboard 25, that define, in a cross-section on an imaginary horizontal plane, the outside and the inside of the loading space 12. At the end of the loading space 12 and the rear part, logs may extend outside the loading space 12 and beyond the rearmost posts 13.

In the context of this description, the inside of the loading space 12 extends, in a vertical direction, to an imaginary horizontal plane defined by top ends of the bordering structures or the upper ends of the posts 13. Also, the space above this imaginary horizontal plane above the loading space 12 is considered as being outside the loading space 12.

During operation of the forwarder 10, an operator sitting in the operator's cabin 15 drives the forwarder 10 sufficiently close to a pile to be collected and manually controls the boom 20 and the grapple 30 to take up one or more logs at a time from the pile and to deposit them into the loading space 12. Under control of the operator, logs (one or more at a time) in one or several piles are collected and loaded into the loading space 12 to constitute a load. Once the loading space 12 is sufficiently filled, the forwarder 10 is driven for transporting the deposited logs to, for example, a forest depot, close to a logging road, where it deposits its load into one or more piles.

### Operation

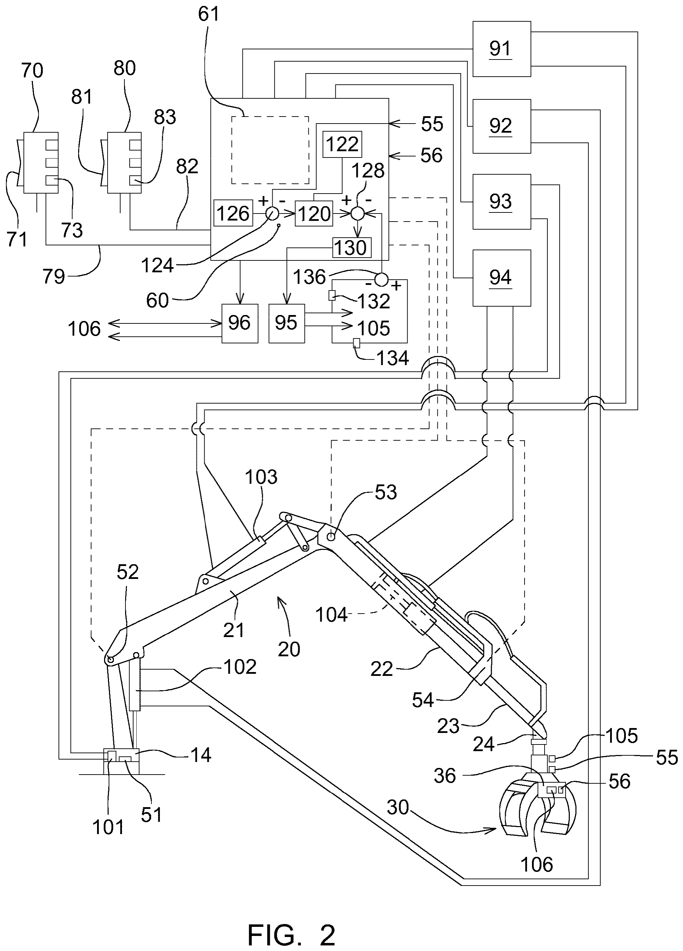

With reference to Figs. 1 and 2, the boom 20 comprises a hoisting boom 21, a stick boom 22 and an extension boom 23. The boom 20 is mounted on the chassis 11 with the help of a slewing device 14 placed between the operator's cabin 15 and the loading space 12 so that the boom 20 can be slewed by rotating it around a vertical rotation axis X_{c}, with respect to the chassis 11 from one side of the loading space 12 to another. The hoisting boom 21 is mounted by a joint to the slewing device 14, the stick boom 22 is mounted by a joint to an end of the hoisting boom 21, and the extension boom 23 is fitted at an end of the stick boom 22, to be movable in its longitudinal direction so that it can move from the end of the stick boom 22 to the inside of the stick boom 22 and protrude from it.

Actuators 101, 102, 103, 104, 105, 106 functioning, for example, hydraulically, are provided for movements of the boom 20 between the hoisting boom 21 and the slewing device 14, between the hoisting boom 21 and the stick boom 22, between the stick boom 22 and the extension boom 23, between the distal end 24 and the grapple 30 and at the grapple 30, for turning the slewing device 14 around the vertical axis, for turning the hoisting boom 21 with respect to the slewing device 14 around a horizontal axis, for turning the stick boom 22 with respect to the hoisting boom 21 around a horizontal axis, for moving the extension boom 23 in and out of the stick boom 22, for rotating the grapple 30 around a vertical axis with respect to the distal end 24 and for opening and closing the grapple 30. The actuators 102, 103, 104 are constituted by linear actuators, e.g. hydraulic cylinders, while actuators 101, 105 and 106 are usually hydraulic motors, thus having a rotating output.

With reference to Fig. 2, control of the forwarder 10 and the boom 20 is configured to be carried out from the operator's cabin 15 by the operator by means of one or more manually operable control input devices 70, 80. Thus, operator's cabin 15 is equipped with one or more control input devices 70, 80 in the form of a joystick constituted by, for example, a stick pivotable on a base. The control input devices 70, 80 may include one or more supplementary control elements 71, 81 such as, for example, rocker switches, rocker levers, switches, or pushbuttons 73, 83. The control input devices 70, 80, when pivotable, are configured to be turned forward, backward, to the left and to the right for controlling movements of the boom 20 or its distal end 24.

For actuating control functions, the operator has a joystick for the left hand and another joystick for the right hand. The joystick may include a rocker switch provided therein for controlling, for example, the movement of the boom 20 as well as the closing and opening of the grapple 30.

During the actuation, control commands formed by the control functions actuated by the control input devices 70, 80 are transmitted from these control input devices 70, 80 along communication buses 79, 82 to an electronic control unit 60 including a memory device 61. The control unit 60 applying software elements including algorithms actually takes care of controlling devices and actuators, for example the actuators 101, 102, 103, 104, 105, 106 setting off various functions of the boom 20 and the grapple 30, for example by controlling electromagnetic valves 91, 92, 93, 94, 95, 96 of the actuators 101, 102, 103, 104, 105 and 106 in a way required by the control functions. The valves 91, 92, 93, 94, 95, 96 are connected to one or more pumps for providing pressurized hydraulic fluid and to a reservoir containing hydraulic fluid, while the pump or pumps take the fluid from the reservoir.

### Control

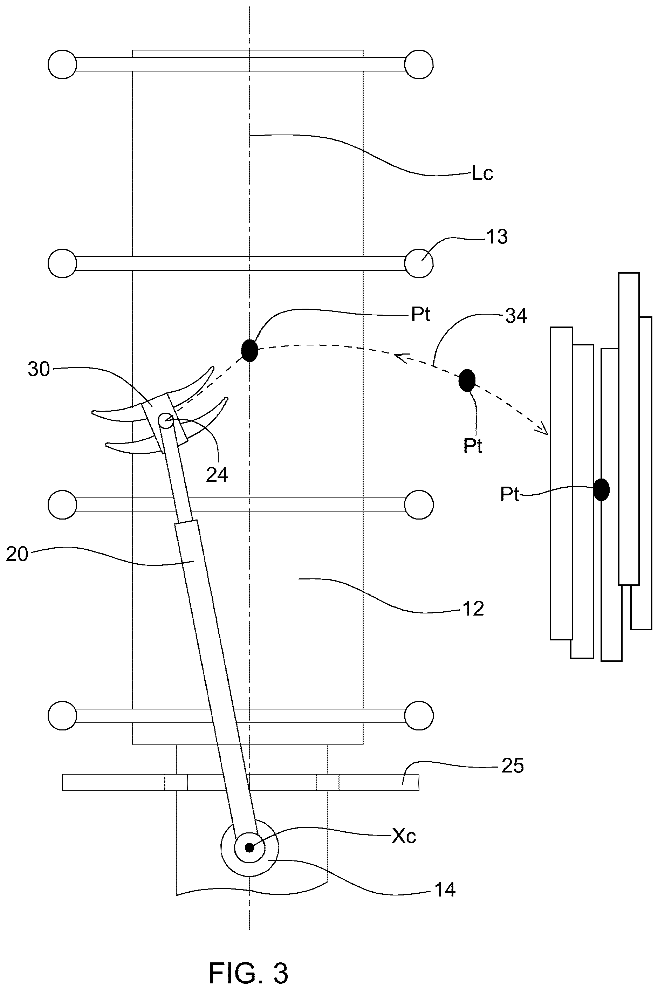

While a purely manual control of the actuators 101, 102, 103, 104, 105, 106 would be possible, using the control input devices 70, 80, the control unit 60 including the memory device 61 is in an embodiment adapted to store one or more target positions Pt which are located in the space around, in the vicinity of, or within reach of the boom 20 and to which the boom 20 may transfer the grapple 30 automatically. The transfer may start from a start position represented by one of the target positions Pt (cf. fig. 3), or from a random position, or from current position of the grapple 30 or the distal end 24. Alternatively, the transfer may start from a start position represented by one of the target positions Pt via which the grapple 30 or the distal end 24 has moved during a preceding automatic transfer.

The target position Pt may be defined with respect to the forwarder 10 or the boom 20. The one or more target positions Pt may include, on the one hand, one or more predetermined or fixed target positions Pt already stored in the control unit 60 and, on the other hand, temporary target positions Pt defined during operation of the forwarder 10 or the boom 20.

The control unit 60 determines a path 34 for the distal end 24 and/or the grapple 30 to one or more of the target positions Pt from the start position. The automatic transfer of the distal end 24 or, more preferably, the grapple 30 to the target position Pt is includes a sequence of motions of the above control input device(s) 70, 80, the motion(s) being brought about manually by the operator. Thus, when for example loading logs with the forwarder 10, the path 34 includes at least a first target position Pt that is inside the loading space 12 and a second target position Pt that is outside the loading space 12 (i.e. above or beside the loading space 12). Additionally, the transfer and the path 34 may include a third target position Pt that is preferably outside the loading space 12, at the current position of the distal end 24 or the grapple 30, for example at a location above or on top of a pile of logs that is on the ground and from which logs are to be loaded into the loading space 12. In this example, the path 34 is configured to start at the third target position Pt or at the current position, and to proceed via the second target position Pt to the first target position Pt representing an end of the path 34 and a stop position where the transfer automatically stops.

According to a second example related to, for example, moving the grapple 30 from the loading space 12 in preparation for loading logs, the transfer and the path 34 includes at least a fourth target position Pt that is outside the loading space 12 (e.g. beside the loading space 12) and a fifth target position Pt that is also outside the loading space 12 (i.e. above or beside the loading space 12). Additionally, the transfer and the path 34 may include a sixth target position Pt that is, preferably inside the loading space 12, at the current position of the distal end 24 or the grapple 30. The fourth target position Pt is a location above or on top of a pile of logs that is on the ground and from which logs are to be loaded into the loading space 12. The pile may be the same as in the first example. Alternatively, the fourth target position Pt is substituted by the third target position Pt when, for example, the pile is the same as in the first example. In this example, the automatic transfer and the path 34 is configured to start at the sixth target position Pt or at the current position, and to proceed via the fifth target position Pt to the fourth target position Pt representing an end of the path 34 or a stop position where the transfer automatically stops.

With reference to Fig. 2, sensing elements 51, 52, 53, 54, 55, 56 are installed in the slewing device 14, in the joint between the slewing device 14 and the hoisting boom 21, in the joint between the hoisting boom 21 and the stick boom 22, between the stick boom 22 and the extension boom 23 and at the grapple 30. The sensing elements 51, 52, 53 measure the position of the slewing device 14, for example its angle of rotation with respect to a given reference position, the angle of the hoisting boom 21 and the angle of the stick boom 22 with respect to each other and the slewing device 14. The sensing element 54 measures the movement of the extension boom 23. The sensing element 55 senses the rotation angle of the grapple 30 around the vertical axis and the sensing device 56 senses the opening angle of the grapple 30. The sensing elements 51, 52, 53, 54, 55, 56 may be constituted by angle sensors and/or linear sensors.

The sensing elements 51, 52, 53, 54, 55, 56 are operably connected to the control unit 60 that receives measurement data generated by the sensing elements 51, 52, 53, 54, 55, 56 and indicative of the measured quantity, be it in a wired manner or by wireless data transfer connections, for example based on radio waves. By means of the measurement data, the control unit 60 is able to determine the position of the slewing device 14, the hoisting boom 21, the stick boom 22, the extension boom 23, the rotation angle of the grapple 30 around the vertical axis and the opening angle of the grapple 30. On the basis of the measurement data and/or the above positions, the control unit 60 is able to determine the position of the boom 20, the distal end 24, and/or the grapple 30 with respect to a predetermined reference point. Based on the measurement data, the control unit 60 is able to learn and later during automatic execution, repeat and control the path 34.

With the sensing elements 51, 52, 53, 54, 55, 56, the position, speed and/or acceleration of a point in the forwarder 10, the boom 20, the distal end 24, and/or the grapple 30 can be determined with respect to a given reference point. The control unit 60 continuously controls the movements of the actuators and devices, for example the actuators 101, 102, 103, 104, 105, 106, using the signals of the sensing elements 51, 52, 53, 54, 55, 56 as feedback input for the actual position in such a way that the distal end 24 and/or the grapple 30 travels along one of the predetermined paths 34 as closely as possible. The sensing element 56 can be used for controlling actuator 106 opening and closing the grapple 30, i.e., moving the gripping yaws of grapple 30 between a closed and an opened position, and/or for giving the control unit 60 a signal that a log is taken up when the grapple 30 is closed and that a log is released when grapple 30 is opened.

The automatic transfer explained above may be applied, for example, when the forwarder 10 has been driven next to a pile of logs and the logs are to be loaded from the pile into the loading space 12 of the forwarder 10. The grapple 30 is thus moved to a location above the pile by moving the boom 20, after which the grapple 30 is employed to grip logs in the pile for transferring them into the loading space 12. After that, the grapple 30 being, preferably, in a location above the pile or in another location, to be representing the current position and constituting a start position, the operator first enables and then sets off the automatic transfer as explained above and the grapple 30 is transferred to the next target location Pt defined by the path 34, for example the second target position Pt. The start position may be stored and represent the third target position Pt of the above first example.

When entering the loading space 12, the grapple 30 and the logs therein are preferably lifted higher than the imaginary horizontal plane defined by the bordering structures of the loading space 12. The location of the target position Pt outside the loading space 12 and in use for the automatic transfer, for example the second target position Pt, is selected accordingly. Then, from this target position Pt, the grapple 30 and the logs therein are lowered to the target position Pt inside the loading space 12, possibly representing the stop position and the first target position Pt of the above first example, to a suitable height inside the loading space 12 below the imaginary horizontal plane. At this target position Pt, the automatic transfer stops and any automatic transfer is automatically disabled. When necessary, the grapple 30 may be additionally transferred manually by the operator to a location that is suitable for dropping or depositing the logs on the bottom of the loading space 12 or onto logs already placed therein, by gripping jaws provided in the grapple 30.

When exiting the loading space 12, the grapple 30 that is empty may be lifted higher than the imaginary horizontal plane, to above or beside the loading space 12 (i.e. outside the loading space 12). The location of the target position Pt outside the loading space 12 and in use for the automatic transfer, for example the fifth target position Pt, is selected accordingly. Then, from this target position Pt, the grapple 30 is lowered to the target position Pt above the pile of logs, possibly representing the stop position and/or, for example, the fourth target position Pt, to a suitable height. When necessary, the grapple 30 may be additionally transferred manually by the operator to a location that is suitable for gripping logs in the pile, by opening the grapple 30 and thus the gripping jaws thereof. Thereafter, loading of the logs continues.

For unloading the forwarder 10 at another location, a similar path 34 can be used, however moving the logs (one or more logs at a time) from the loading space 12 to the ground or onto a pile of logs on the ground.

After all, the control of actuators 101, 102, 103 and 104 can be performed automatically, as described above and in the prior art according to EP 4 470 363 A1, the entire contents of which being incorporated herein by reference, or purely manually by the operator, using the control input devices 70, 80.

### Grapple rotation direction

Additionally, automation of the actuator 105 controlling the angle of the grapple 30 around the vertical axis is provided. Thus, in the control unit 60, an angle of actuator 105 and thus of the grapple 30 is assigned at least to some of the target positions Pt, in particular to the target position in which the log is taken up by the grapple 30 and to the target position in which the log is released by the grapple 30. During the teaching phase, this vertical angle of grapple 30 is sensed by sensor 55 and stored in the memory 61 and recalled in the following replay phase. The angle of grapple 30, when the latter is in the loading space for depositing or collecting logs, is usually predefined such that the logs are oriented along the longitudinal direction Lc of loading space 12.

It should be noted that the rotation of actuator 105, when the distal end 24 of boom 20 moves on path 34, can be performed selectively in one of two directions of rotation, i.e. to the left (anti-clockwise) and to the right (clockwise) when viewed from top. To define the direction of rotation, the control elements 71, 81 of the control input devices 70, 80 comprises pushbuttons 73, 83 allowing the operator to define the rotation direction of the actuator 105 and thus of the grapple 30. In the embodiment shown, there is one pushbutton 73 on the left control input device 70 and one pushbutton 83 on the right control input device 80. The operator can thus, if a log to be moved and thus the grapple 30 is closed and thus a corresponding signal from sensor 56 is received, indicating closure of grapple 30, should be turned during its travel on path 34 to the left, depress left pushbutton 73 and if the log is to be turned to the right, depress right pushbutton 83. To make operation easier for the operator, lights assigned to pushbottons 73, 83 can be switched on by control unit 60, indicating that the operator has the opportunity to choose the turning direction. To make things even easier for the operator, the grapple 30 can on its both sides 36 have different markings, like particular colors, for example red and yellow, and the pushbuttons 73, 83 can have corresponding markings. Thus, if the operator depresses the pushbutton 73 or 83 with the marking corresponding to the marking of the grapple 30 facing to the left, the grapple 30 will be turned to the left.

If the operator does not desire to have automatic rotation of grapple 30, it is possible to manually control movement of the boom 20 and then the operator can rotate grapple 30 manually by means of the control elements 71, 81, in particular the pushbuttons 73, 83. On the other hand, if the operator would prefer automatic grapple rotation control, but not to select the rotation direction, an automatic approach would be possible, for example taking the rotation direction with the smallest angle or avoiding known (like the posts 13) or sensed obstacles, for example detected by a camera.

As mentioned, operator-defined control of the grapple rotation direction is not tied to a teaching and automatic replay of the path 34 but can also be performed during a purely manual control of boom 20. In this embodiment, only actuator 105 is controlled by control unit 60 depending on the actual position, movement or acceleration of the distal end 24 of the boom. During loading logs, grapple 30 is thus rotated to a learned orientation for taking up logs and into a predetermined orientation along longitudinal direction Lc of loading space 12 for depositing logs, and for unloading logs, grapple 30 is rotated to a learned orientation for depositing logs and into a predetermined orientation along longitudinal direction Lc of loading space 12 or taking up logs.

### Grapple actuator control

As described, actuator 105 can be controlled by control unit 61 to be moved in desired orientations while distal end 24 moves on a path 34, the latter movement under automatic or operator control. Since actuator 105 is at the very outer end of boom 20, the hydraulic lines between valve 95 and actuator 105 are relatively long, and thus the hydraulic pressure on actuator 105 depends on the load acting on actuator 95, i.e. the mass and moment of inertia of the log to be rotated. In order to achieve a sufficiently precise control of actuator 105, control unit 60 preferably comprises an adaptive, closed control loop for controlling the valve 95 and thus actuator 105, as shown in fig. 2.

The control loop receives a signal 126 representing a desired angle of actuator 105, which is determined in the manner previously described, i.e. defines a nominal orientation of grapple 30 around the vertical axis, corresponding to the position or movement of grapple 30 on its path 34. The actual orientation of grapple 30 is sensed by sensor 55 and represents the actual position of grapple 30. A controller, in the embodiment of fig. 2 in the form of a proportional-differential controller 120, receives the difference between signal 126 and feedback signal from sensor 55 from a subtracting unit 124. Controller 120 is preferably a proportional-differential (PD) controller and controls valve 95. Controller 120 also receives a load signal 122 representing a load of the grapple, in particular the mass, weight and/or moment of inertia of the grapple 30 with the log(s) actually carried by grapple 30. The load signal 120 is used to control the gain of controller 120, i.e., the nominal pressure acting on actuator 105 by valve 95 at a given input signal of controller 120. In other words, the larger the load on the grapple 30, the larger the pressure on actuator 105 and thus the torque acting on grapple 30 will be at a given deviation of the actual grapple angle from a nominal angle.

The output of controller 120 hence represents a nominal, desired torque that should be provided by actuator 105. A torque controller 130 which on its end controls the valve 95 receives a difference between the nominal torque, as received from controller 120 and an actual torque sensed by pressure sensors 132, 134 on the hydraulic inlet and outlet of actuator 105. This difference is calculated by a subtractor 128. The actual torque corresponds to the difference between the hydraulic pressures sensed by the sensors 132, 134 at the inlet and outlet of the actuator 105, as determined by a subtractor 136. The control loop for the actuator 105 is thus a cascade-proportional-differential-torque controller with PD controller 120 and torque controller 130. The PD controller 120 determines the desired torque and the torque controller 130 controls the valve 95 to provide a pressure on actuator 105 corresponding to the desired torque. It should be noted that actuator 105 could be an electric motor, and then the torque controller 130 would control a nominal torque of the electric motor by providing a pulse width modulated drive current or voltage and the actual torque can be derived from a back emf of the electric motor.

The load signal 122 can be automatically determined by control unit 60 in different ways. According to a first embodiment, the hydraulic pressure on one or more actuators 102, 103 and/or 104 can be sensed when the distal end 24 of boom 20 is lifted by these actuators 102, 103 and/or 104. The pressure depends on mass (measured in kg) and weight (measured in N) of grapple 30 and the logs held by grapple 30. Control unit 30 thus senses the pressure on the lifting side of actuators 102, 103 and/or 104 during lifting of grapple 30, preferably at the very start of the path 34 of grapple 30 to or from the loading space 12 and calculates the load based on the pressures, using the known kinematics of the boom 20 and the position of the actuators 102, 103 and/or 104 sensed by sensors 52, 53 and/or 54. In a second embodiment, the load is sensed by a scale integrated into the rotator, which is turned by actuator 105, which turns the grapple 30 with respect to the distal end of stick boom 22 or between the rotator and the grapple 30 (not shown, but see for example US 2022/0228905 A1).

In order to achieve a sufficiently exact calculation or estimation of the mass, a number of pressure measurements can be performed, including calculation of an average value, which will get more and more dynamic raw mass estimate data (and will get more accurate) in time compared to a single measurement. It is also useful to know when to start the mass estimate calculation when picking up logs from the ground (loading) or loading space 12 (unloading). Hence, the acceleration of the boom distal end 20 (which acceleration can be lower than a certain value like 0.6 m/s²) can used together with information from sensors 52, 53, 54 when the grapple 30 has lifted (when closed) over a defined threshold distance (like 0.5 m) above ground or load space. The mass estimation is triggered and thus mass estimate data is fed to adaptive controller 120 for the first time when the control is activated based on detection of a lifting boom 24. When the automatic work cycle of the rotation control proceeds further and the reaches different positions, the mass estimation is triggered again, and the derived load signal 122 fed to adaptive controller 120.

In another embodiment, during rotation of actuator 105, the pressure acting on actuator 105 and the achieved reaction of grapple 30 is sensed by sensors 132, 134 and 55, and thus a signal 122 representing the moment of inertia of grapple 30 plus log(s) held by grapple 30 is provided. Both embodiments can be combined in order to sense both mass or weight and moment of inertia of the grapple and load.

In a further embodiment, an estimate of the mass of the logs with grapple can be calculated using a neural network and machine vision with (stereo) camera and/or machine internal data, such as pressures, boom positions/speeds and boom control data.

It should be noted that the load-dependent control of actuator 105 by the adaptive, closed control loop for controlling actuator 105, as shown in fig. 2 is not tied to the operator input of the rotation direction, but can be used independently therefrom. However, the details of automatic and manual control of the boom and the rotation of grapple as described above and laid down in claims 2 to 5 can be used in conjunction with the adaptive, closed control loop for controlling actuator 105.

## Claims

1. A forwarder (10) with:
an articulated boom (20) having a distal end (24), wherein the boom (20) is movable in vertical and horizontal directions and slewable around a vertical rotation axis (X_{c}),
a loading space (12) that is open at the top,
a grapple (30) for handling logs and suspended from the distal end (24),
a control unit (60) for controlling actuators (101-105) configured to control movements of the boom (20) and rotation of the grapple (30), and
at least one manually operable control input device (70, 80) operatively connected to the control unit (60) and adapted to be manually operated by an operator for controlling operation of the boom (20) and the grapple (30),
wherein the control unit (60) is configured to control the actuators (101-105) to move the boom (20) and to automatically rotate the grapple (30) with respect to the distal end (24) into a predefined position and orientation for grabbing one or more logs, and/or to control the actuators (101-105) to move the boom (20) and to automatically rotate the grapple (30) with respect to the distal end (24) into a predefined position and orientation for depositing the one or more logs,
**characterized in that** the control unit (60) is configured to receive instructions defining the direction of rotation of the grapple (30) from the control input device (70, 80).

2. The forwarder (10) according to claim 1, wherein the control unit (60) is configured to control the actuator (105) controlling rotation of the grapple (30) to rotate the grapple (30) into a predefined and prestored orientation suited to grab or release a log when the predetermined position is within the loading space (12).

3. The forwarder (10) according to claim 1 or 2, wherein the control unit (60) is configured to control the actuator (105) controlling rotation of the grapple (30) to rotate the grapple (30) into a storable orientation suited to grab or release a log when the predetermined position is outside the loading space (12).

4. The forwarder (10) according to claim 3, wherein the control unit (60) is configured to learn the storable orientation in a previous log loading or unloading operation based on operator input controlling the rotation angle of the grapple (30) via the control input device (70, 80).

5. The forwarder (10) according to one of the preceding claims, wherein the control unit (60) is configured to control the actuators (101-104) to move the boom (20) on a path (34) between the predefined positions based on operator input via the control input device (70, 80) or control the actuators (101-104) to move the boom (20) on a learned path (34) between the predefined positions, the learned path learned in a previous log loading or unloading operation based on operator input controlling the movement of the boom (20) via the control input device (70, 80).

6. The forwarder (10) according to one of the preceding claims, wherein the manually operable control input device (70, 80) comprises a left control input device (70) and a right control input device (80), both of which having actuatable elements assigned to different rotation directions of the grapple (30).

7. The forwarder (10) according to claim 6, wherein the grapple (30) has sides (36) with markings that are also assigned to the actuatable elements of the left control input device (70) and right control input device (80).

8. A forwarder (10), in particular according to one of the preceding claims, with:
an articulated boom (20) having a distal end (24), wherein the boom (20) is movable in vertical and horizontal directions and slewable around a vertical rotation axis (X_{c}),
a loading space (12) that is open at the top,
a grapple (30) for handling logs and suspended from the distal end (24), and
a control unit (60) for controlling actuators (101-105) configured to control movements of the boom (20) and rotation of the grapple (30),
wherein the control unit (60) is configured to control the actuators (101-105) to move the boom (20) and to automatically rotate the grapple (30) with respect to the distal end (24) into a predefined position and orientation for grabbing one or more logs, and/or to control the actuators (101-105) to move the boom (20) and to automatically rotate the grapple (30) with respect to the distal end (24) into a predefined position and orientation for depositing the one or more logs,
**characterized in that** the control unit (60) comprises an adaptive, closed control loop for controlling the actuator (105) rotating the grapple (30), the closed control loop including a controller (120, 130) configured to receive a load signal (122) representing a mass, weight and/or moment of inertia of the grapple (30) and the log or logs carried by the grapple (30), a signal (126) representing a desired angle of the actuator (105) and a signal from a sensor (55) representing the actual angle of the grapple (30) and configured to provide control signals to the actuator (105) based on the received signals.

9. The forwarder (10) according to claim 8, wherein the controller (120, 130) comprises a proportional-differential controller (120).

10. The forwarder (10) according to claim 9, wherein the controller (120, 130) is a cascade-proportional-differential-torque controller.

11. The forwarder (10) according to claim 10, wherein the actuator (105) for rotating the grapple (30) is a hydraulic actuator and the controller (120, 130) comprises a torque controller (130) controlling a valve (95) adapted to control hydraulic pressure at the actuator (105).

12. The forwarder (10) according to claim 11, wherein the torque controller (130) is controlled based on signals from pressure sensors (132, 134) sensing hydraulic pressure on the hydraulic inlet and/or outlet of the actuator (105).

13. The forwarder (10) according to claim 12, wherein the controller (120, 130) is configured to control the valve (95) to provide a hydraulic pressure to actuator (105), at a given deviation of the actual angle of the grapple (30) from the nominal angle, that increases with increasing load signal (122).

14. The forwarder (10) according to one of claims 8 to 13, wherein the control unit (60) is configured to provide the load signal (122) based on sensed pressures on hydraulic actuators (102-104) during lifting of the grapple (30) with the log or logs by the boom (20) and/or based on sensed pressures on the actuator (105) when rotating the grapple (30) with the log or logs.

15. The forwarder (10) according to claim 14, wherein the control unit (60) is configured to sense the load signal (122) consecutively and to calculate an average of the load signals (122).

## Amended claims

### Amended claims in accordance with Rule 137(2) EPC.

1. A forwarder (10) with:
an articulated boom (20) having a distal end (24), wherein the boom (20) is movable in vertical and horizontal directions and slewable around a vertical rotation axis (X_{c}),
a loading space (12) that is open at the top,
a grapple (30) for handling logs and suspended from the distal end (24), and
a control unit (60) for controlling actuators (101-105) configured to control movements of the boom (20) and rotation of the grapple (30),
wherein the control unit (60) is configured to control the actuators (101-105) to move the boom (20) and to automatically rotate the grapple (30) with respect to the distal end (24) into a predefined position and orientation for grabbing one or more logs, and/or to control the actuators (101-105) to move the boom (20) and to automatically rotate the grapple (30) with respect to the distal end (24) into a predefined position and orientation for depositing the one or more logs,
wherein the control unit (60) comprises an adaptive, closed control loop for controlling the actuator (105) rotating the grapple (30), the closed control loop including a controller (120, 130) configured to receive a load signal (122) representing a mass, weight and/or moment of inertia of the grapple (30) and the log or logs carried by the grapple (30), a signal (126) representing a desired angle of the actuator (105) and a signal from a sensor (55) representing the actual angle of the grapple (30) and configured to provide control signals to the actuator (105) based on the received signals,
wherein the actuator (105) for rotating the grapple (30) is a hydraulic actuator and the controller (120, 130) comprises a torque controller (130) controlling a valve (95) adapted to control hydraulic pressure at the actuator (105),
**characterized in that** the torque controller (130) is a cascade-proportional-differential-torque controller and controlled based on signals from pressure sensors (132, 134) sensing hydraulic pressure on the hydraulic inlet and/or outlet of the actuator (105).

2. The forwarder (10) according to claim 1, wherein the controller (120, 130) is configured to control the valve (95) to provide a hydraulic pressure to actuator (105), at a given deviation of the actual angle of the grapple (30) from the nominal angle, that increases with increasing load signal (122).

3. The forwarder (10) according to one of claims 1 or 2, wherein the control unit (60) is configured to provide the load signal (122) based on sensed pressures on hydraulic actuators (102-104) during lifting of the grapple (30) with the log or logs by the boom (20) and/or based on sensed pressures on the actuator (105) when rotating the grapple (30) with the log or logs.

4. The forwarder (10) according to claim 3, wherein the control unit (60) is configured to sense the load signal (122) consecutively and to calculate an average of the load signals (122).

5. A forwarder (10) according to one of claims 1 to 4, with:
at least one manually operable control input device (70, 80) operatively connected to the control unit (60) and adapted to be manually operated by an operator for controlling operation of the boom (20) and the grapple (30),
wherein the control unit (60) is configured to receive instructions defining the direction of rotation of the grapple (30) from the control input device (70, 80).

6. The forwarder (10) according to claim 5, wherein the control unit (60) is configured to control the actuator (105) controlling rotation of the grapple (30) to rotate the grapple (30) into a predefined and prestored orientation suited to grab or release a log when the predetermined position is within the loading space (12).

7. The forwarder (10) according to claim 5 or 6, wherein the control unit (60) is configured to control the actuator (105) controlling rotation of the grapple (30) to rotate the grapple (30) into a storable orientation suited to grab or release a log when the predetermined position is outside the loading space (12).

8. The forwarder (10) according to claim 7, wherein the control unit (60) is configured to learn the storable orientation in a previous log loading or unloading operation based on operator input controlling the rotation angle of the grapple (30) via the control input device (70, 80).

9. The forwarder (10) according to one of claims 5 to 8, wherein the control unit (60) is configured to control the actuators (101-104) to move the boom (20) on a path (34) between the predefined positions based on operator input via the control input device (70, 80) or control the actuators (101-104) to move the boom (20) on a learned path (34) between the predefined positions, the learned path learned in a previous log loading or unloading operation based on operator input controlling the movement of the boom (20) via the control input device (70, 80).

10. The forwarder (10) according to one of claims 5 to 9, wherein the manually operable control input device (70, 80) comprises a left control input device (70) and a right control input device (80), both of which having actuatable elements assigned to different rotation directions of the grapple (30).

11. The forwarder (10) according to claim 10, wherein the grapple (30) has sides (36) with markings that are also assigned to the actuatable elements of the left control input device (70) and right control input device (80).
